# EUROPÄISCHE PATENTSCHRIFT

(11) **EP 1 992 930 B1**
(45) Veröffentlichungstag und Bekanntmachung des Hinweises auf die Patenterteilung: **09.03.2011**
(21) Anmeldenummer: 08005637.7
(22) Anmeldetag: 26.03.2008
(51) Int. Cl.: G01L 3/24, G01M 17/007

(54) **Verfahren zur Ermittlung der Verlustleistung im Antriebsstrang eines Kraftfahrzeugs und Prüfstand zur Durchführung des Verfahrens**
Method for determining the power loss in the power transmission line of a motor vehicle and testbench for carrying out the method
Procédé de détermination de la perte de puissance dans la chaîne cinématique d'un véhicule automobile et banc d'essai destiné à l'exécution du procédé

(30) Priorität: 12.05.2007 DE 102007022332
(43) Veröffentlichungstag der Anmeldung: 19.11.2008
(73) Patentinhaber: GM Global Technology Operations, Inc., Detroit, MI 48265-3000 (US)
(72) Erfinder: Temesvary, Stephan, 65428 Rüsselsheim (DE); Kremer, Andreas, 61449 Steinbach (DE)
(74) Vertreter: Strauss, Peter

(56) Entgegenhaltungen:
- DE-A1- 10 144 699
- FR-A- 2 864 620
- US-A- 5 429 004
- US-A- 5 686 651

## Beschreibung

Die Erfindung betrifft ein Verfahren zur Ermittlung der Verlustleistung im Antriebsstrang eines Kraftfahrzeugs. Sie betrifft weiter einen zur Durchführung dieses Verfahrens geeigneten Prüfstand.

Der Fahrwiderstand eines Fahrzeugs setzt sich aus unterschiedlichen Komponenten zusammen, beispielsweise aus dem Luftwiderstand der Karosserie, dem Rollwiderstand der Reifen auf der Fahrbahn und aus dem Widerstand im Antriebsstrang des Fahrzeugs. All diese Beiträge bedingen Verluste in der Leistung des Fahrzeugs.

Aus der DE 196 04 811 A1 ist ein Verfahren zur Messung von Fahrwiderständen bekannt. Mit diesem Verfahren ist es möglich, den Gesamtfahrwiderstand eines Fahrzeugs zu ermitteln. Dabei wird das Fahrzeug mittels eines Wagenhebers angehoben und ein Ausrolltest auf einem Prüfstand ausgeführt, um einen Übertragungsverlust unabhängig vom Fahrtwind und Rollverlusten zu ermitteln.

US 5429004 offenbart eine Vorrichtung zur Ermilttung dynamischer Antriebs werte eines fahrzeugs durch vVerwendung von Massescheiben

Darüber hinaus wäre es jedoch wünschenswert, auch einzelne Beiträge zum Gesamtfahrwiderstand einzeln messen zu können. Solche Messungen werden üblicherweise im Windkanal bzw. auf Prüfständen durchgeführt, wobei beispielsweise für die Messung der Verlustleistung im Antriebsstrang das Getriebe ausgebaut und separat vermessen wird, was verhältnismäßig aufwendig ist.

Aufgabe der Erfindung ist es daher, ein besonders einfaches und schnelles Verfahren zur isolierten Messung der Verlustleistung im Antriebsstrang anzugeben.

Darüber hinaus wird ein zur Durchführung dieses Verfahrens geeigneter Prüfstand angegeben.

Erfindungsgemäß wird diese Aufgabe mit dem Gegenstand des unabhängigen Patentanspruchs gelöst. Vorteilhafte Weiterbildungen der Erfindung sind Gegenstand der abhängigen Patentansprüche.

Ein erfindungsgemäßes Verfahren zur Ermittlung der Verlustleistung im Antriebsstrang eines Kraftfahrzeugs weist folgende Schritte auf: Es wird ein Kraftfahrzeug mit die Antriebsräder ersetzenden, durch einen Antriebsstrang angetriebenen Massescheiben bereitgestellt, wobei die Massescheiben ein bekanntes Trägheitsmoment θ aufweisen. Der Antriebsstrang ist dabei zur Kraftübertragung von einem Motor des Kraftfahrzeugs auf die Antriebsräder ausgebildet. Das Kraftfahrzeug wird derart positioniert, dass die Massescheiben keinen Bodenkontakt haben. Mit "Bodenkontakt" ist hier und im folgenden neben dem Kontakt zum Boden selbst auch jeder Kontakt zu einem anderen Rollreibung verursachenden Gegenstand gemeint. Insbesondere haben die Massescheiben also weder mit einer Fahrbahn noch mit Rollen oder sonstigen Vorrichtungen eines Prüfstandes Kontakt, sondern sie sind auf den Fahrzeugachsen frei in der Luft angeordnet.

Die Massescheiben werden durch den Motor angetrieben und der Antriebsstrang wird von dem Motor zu einem Auskuppelzeitpunkt T_{K} abgekoppelt, so dass die Kraftübertragung unterbrochen ist. Es erfolgt die Messung der zeitlichen Entwicklung der Drehzahl n der Massescheiben ab einem Startzeitpunkt Tₛ mit Tₛ ≥ T_{K} bis zu einem Endzeitpunkt T_{E}.

Die Massescheiben werden durch den Motor angetrieben und der Antriebsstrang wird von dem Motor zu einem Auskuppelzeitpunkt T_{K} abgekoppelt, so dass die Kraftübertragung unterbrochen ist. Es erfolgt die Messung der zeitlichen Entwicklung der Drehzahl n der Massescheiben ab einem Startzeitpunkt T_{S} mit T_{S} ≥ T_{K} bis zu einem Endzeitpunkt T_{E}.

Dieses Vorgehen entspricht im Grunde demjenigen bei einem "Coast-Down"- oder Ausroll-Test, wie er zur Ermittlung des Gesamtfahrwiderstandes auf einer Teststrecke durchgeführt wird. Allerdings sind bei dem erfindungsgemäßen Vorgehen einem Grundgedanken der Erfindung zufolge die Beiträge des Luftwiderstandes der Karosserie und der auf die Reifen wirkenden Rollreibung dadurch ausgeschaltet, dass das Kraftfahrzeug auf einer Hebebühne oder eine ähnliche Vorrichtung aufgebockt ist und sich demnach nicht fortbewegt. Zudem sind die angetriebenen Räder durch Massescheiben mit genau bekannten Trägheitsmoment ersetzt, so dass die Messung der Drehzahl für eine Ermittlung der Verlustleistung ausreichend ist.

Das erfindungsgemäße Verfahren hat insbesondere den Vorteil, dass die Verlustleistung des Antriebsstranges isoliert gemessen werden kann, ohne dass das Getriebe aufwendig aus- und anschließend wieder eingebaut werden muss. Ein separater Getriebeprüfstand ist demnach nicht notwendig. Dadurch wird es möglich, mit geringem Aufwand ausschließlich die Verlustleistung im Antriebsstrang im eingebauten Zustand zu messen. Dies ist insbesondere vorteilhaft, wenn in der Produktion eines Kraftfahrzeugs Veränderungen nur an einzelnen Komponenten vorgenommen werden sollen. Der Gesamtfahrwiderstand muss dann nicht mehr gemessen werden, sondern kann aus den bekannten Widerständen der einzelnen, unveränderten Komponenten und dem der veränderten Komponenten, der als einziger gemessen werden muss, zusammengesetzt werden. Auf diese Weise kann der Fahrwiderstand von Derivaten eines Kraftfahrzeugs mit dem geringst möglichen Messaufwand ermittelt werden.

Die nach dem erfindungsgemäßen Verfahren ermittelte Verlustleistung im Antriebsstrang enthält gleichzeitig bereits die Verluste in den Seitenwellen und die unbelastete Radlagerreibung.

In einer vorteilhaften Ausführungsform gilt für den Endzeitpunkt T_{E} der Drehzahlmessung n(T_{E})=0, das heißt, die Drehzahlmessung wird bis zum Stillstand der Massescheiben durchgeführt. Auf diese Weise kann die Verlustleistung über den gesamten für den Betrieb des Kraftfahrzeugs relevanten Geschwindigkeitsbereich vermessen werden.

Zweckmäßigerweise wird das Fahrzeug für die Durchführung der Messung auf einer Hebebühne positioniert, so dass die die angetriebenen Räder ersetzenden Massescheiben den Bodenkontakt verlieren.

Die Messung der Drehzahl n erfolgt in einer Ausführungsform mit den ABS-Sensoren des Kraftfahrzeugs. Dies hat den Vorteil, dass ohnehin zur Messung der Raddrehzahl aller Antriebsräder vorhandene Sensoren genutzt werden können, die nur noch ausgelesen werden müssen.

Üblicherweise kommt bei Personenkraftwagen ein 4-Kanal-ABS zum Einsatz, bei dem an jedem der vier Räder im Bereich der Radlager ein Sensor angeordnet ist, der die Drehzahl des Rades misst. Jeder Sensor weist dabei einen mit einer Spule umwickelten Dauermagneten auf, der die Drehung des Rades nicht mit vollzieht. Ferner weist jeder Sensor ein Sensorzahnrad auf, das sich mit dem Rad dreht. Die ferromagnetischen Zähne des Sensorzahnrades induzieren bei jedem Durchgang vor dem Dauermagneten eine Wechselspannung in der Spule, deren Periode und Amplitude von der Raddrehzahl abhängen. Die Wechselspannung kann ausgelesen, verarbeitet und gespeichert werden, um den Verlauf der Drehzahl über der Zeit zu analysieren. Bei dem erfindungsgemäßen Verfahren erfolgt dies zweckmäßigerweise nur für die durch Massescheiben ersetzten Räder.

Die Nutzung der ABS-Sensoren für die Drehzahlmessung hat den Vorteil, dass ohnehin im Fahrzeug vorhandene Messtechnologie genutzt werden kann. Es ist demnach kein externer Messaufbau erforderlich. Zudem erlauben die ABS-Sensoren eine sehr genaue und zuverlässige Drehzahlmessung.

Es ist jedoch auch die Nutzung anderer ohnehin im Kraftfahrzeug vorhandener Sensoren möglich, beispielsweise des Tachometers.

Alternativ kann jedoch die Messung der Drehzahl n auch mit einem außerhalb des Fahrzeugs angeordneten externen Messgerät erfolgen.

Grundsätzlich ist es möglich, die Drehzahl n lediglich an einer der Massescheiben zu messen. Es kann jedoch auch vorteilhaft sein, die Drehzahl n an mindestens zwei Massescheiben zu messen. Durch einen Vergleich der für verschiedene Massescheiben ermittelten Drehzahlen n können beispielsweise schleifende Bremsbacken erkannt werden.

In einer Ausführungsform des Verfahrens erfolgt die Ermittlung der Verlustleistung zunächst mit ersten Massescheiben mit einem Trägheitsmoment Θ₁, und anschließend mit zweiten Massescheiben mit einem Trägheitsmoment Θ₂, wobei Θ₁ ≠ Θ₂ gilt und beide Trägheitsmomente bekannt sind. Dies hat den Vorteil, dass das unbekannte Trägheitsmoment des gesamten Antriebsstranges herausgerechnet werden kann.

Vor dem Antreiben der Massescheiben durch den Motor oder zumindest vor dem Abkoppeln des Antriebsstranges von dem Motor werden die Beugewinkel der Antriebswelle in einer vorteilhaften Ausführungsform auf einen für eine Fahrsituation des Kraftfahrzeugs typischen Wert eingestellt. Unter der Fahrsituation wird dabei eine Situation verstanden, in der die Räder des Kraftfahrzeugs Kontakt zu einer Fahrbahn haben, wobei sich die Gelenkwellenbeugewinkel der Antriebswelle unter dem Gewicht des Fahrzeugs und dem Einfedern oder Schwenken der Räder einstellen.

Ein Prüfstand zur Ermittlung der Verlustleistung im Antriebsstrang eines Kraftfahrzeugs weist eine Vorrichtung zur Aufnahme eines Fahrzeugs auf, wobei Massescheiben, die die angetriebenen Räder des aufgenommenen Fahrzeugs ersetzen, in einer Messposition keinen Bodenkontakt aufweisen. Diese Vorrichtung kann beispielsweise eine Hebebühne sein. Der Prüfstand weist ferner zumindest einen Sensor zur Ermittlung des zeitlichen Verlaufs einer Drehzahl n der Massescheiben und eine Recheneinheit zur Ermittlung der Verlustleistung im Antriebsstrang des Kraftfahrzeugs aus dem gemessenen zeitlichen Verlauf der Drehzahl n auf.

Vorteilhaft weist der Prüfstand eine Einrichtung zum Einstellen der Beugewinkel der Antriebswelle auf einen für eine Fahrsituation des Kraftfahrzeugs typischen Wert auf. Das Einstellen der Beugewinkel kann dabei beispielsweise durch eine zusätzliche Unterstützung des Kraftfahrzeugs unter der Achse und/oder durch Vorspannen der Federbeine mit einer Spannvorrichtung errecht werden.

Die Vorrichtung hat den Vorteil, dass sie die Messung der Verlustleistung im Antriebsstrang eines Kraftfahrzeugs im eingebauten Zustand des Getriebes erlaubt.

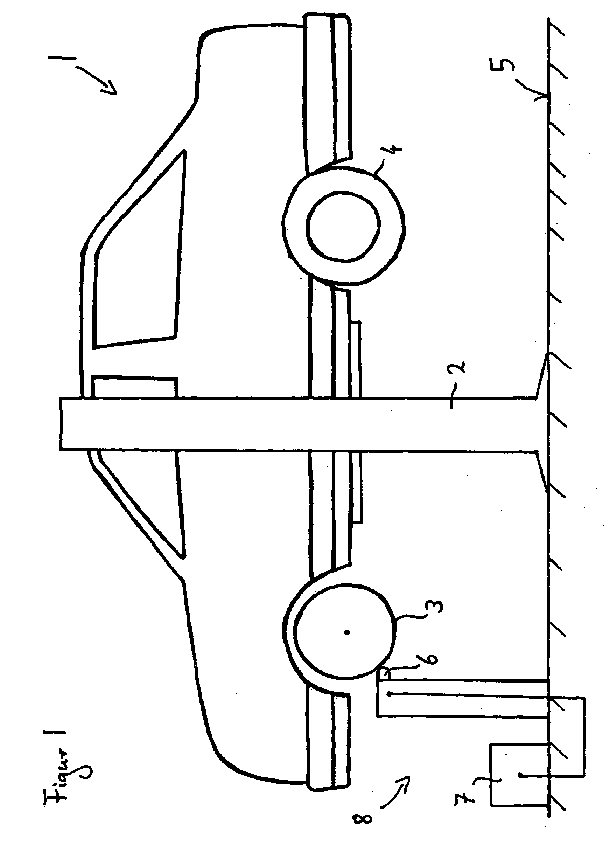

Ausführungsbeispiele der Erfindung werden im folgenden anhand der beigefügten Figur näher erläutert.

Die Figur zeigt ein Kraftfahrzeug während des erfindungsgemäßen Verfahrens zur Ermittlung der Verlustleistung im Antriebsstrang.

Das Fahrzeug 1 gemäß der Figur ist auf einer Hebebühne 2 aufgebockt. Dadurch haben seine Räder 4 keinen Kontakt zu dem Boden 5 und können sich ohne Rollreibung drehen. Dabei wird das Kraftfahrzeug 1 vorteilhaft unter seiner Achse unterstützt, damit gleiche Gelenkwellenbeugewinkel wie im Fahrbetrieb erhalten werden.

In der gezeigten Ausführungsform weist das Kraftfahrzeug 1 einen Vorderradantrieb auf. Das erfindungsgemäße Verfahren eignet sich jedoch auch zur Anwendung bei Hinterrad- oder Allradantrieben und sowohl für manuelle als auch automatische und stufenlose Automatikgetriebe.

Bei dem Kraftfahrzeug 1 gemäß der Figur sind die Vorderräder als angetriebene Räder durch Massescheiben 3 ersetzt, deren Trägheitsmoment Θ bekannt ist. Der nicht dargestellte Motor des Kraftfahrzeugs 1 überträgt durch einen ebenfalls nicht gezeigten Antriebsstrang Kraft auf die Massescheiben 3.

Zur Ermittlung der Verlustleistung im Antriebsstange wird wie folgt vorgegangen: Bei dem Kraftfahrzeug 1 wird ein Gang eingelegt und es wird beschleunigt, bis die Massescheiben 3 eine maximale Drehzahl nₘₐₓ erreichen. Die maximale Drehzahl nₘₐₓ entspricht dabei typischerweise nicht der maximal technisch möglichen Drehzahl, sondern sie bezeichnet die beim Verfahren zur Ermittlung der Verlustleistung maximal erreichte Drehzahl. Die maximale Drehzahl nₘₐₓ wird zu einem Auskuppelzeitpunkt T_{K} erreicht, zu dem der Gang herausgenommen und somit der Motor von der Kraftübertragung durch den Antriebsstrang getrennt wird. Ab einem Startzeitpunkt T_{S} mit T_{S} ≥ T_{K} bis zu einem Endzeitpunkt T_{E} wird die zeitliche Entwicklung der Drehzahl n der Massescheiben 3 gemessen und aufgezeichnet.

In die zu ermittelnde Verlustleistung des Antriebsstranges geht neben der Drehzahl n und ihrer zeitlichen Ableitung auch das bekannte Trägheitsmoment Θ der Massescheiben 3 und das nicht bekannte Trägheitsmoment des Antriebsstranges selbst ein. Dieses kann jedoch herausgerechnet werden, wenn die beschriebene Messung mit Massescheiben 3 mit einem abweichenden Trägheitsmoment Θ₂ wiederholt wird.

Der in der Figur gezeigte Prüfstand 8 umfasst neben der Hebebühne 2 auch ein Messgerät mit einem Sensor 6 zur Erfassung der Drehzahl der Antriebsräder 3. Der in der Figur lediglich schematisch dargestellte Sensor 6 gehört in dieser Ausführungsform zu einem externen Messgerät. Es kann alternativ jedoch auch ein ABS-Sensor oder ein anderer interner Sensor des Kraftfahrzeugs 1 verwendet werden. Der Prüfstand 8 umfasst in der gezeigten Ausführungsform nur einen Sensor 6. Somit wird nur der zeitliche Verlauf der Drehzahlen der vorderen linken Massescheibe 3 erfasst. Es ist jedoch insbesondere bei der Verwendung des ABS-Sensors auch ohne zusätzlichen Aufwand möglich, die Drehzahlen an mehreren Massescheiben 3 gleichzeitig zu messen.

Der Prüfstand 8 umfasst weiter eine Recheneinheit 7 zur Erfassung und Verarbeitung der mit dem Sensor 6 gemessenen Werte. Die Recheneinheit 7 übernimmt dabei insbesondere die Berechnung der Verlustleistung des Antriebsstranges und gegebenenfalls den Vergleich der gemessenen Drehzahlen an mehreren Massescheiben 3.

### Bezugszeichenliste

- 1: Kraftfahrzeug
- 2: Hebebühne
- 3: Massescheibe
- 4: Rad
- 5: Boden
- 6: Sensor
- 7: Recheneinheit
- 8: Prüfstand

- Θ, Θ₁, Θ₂: Trägheitsmoment
- T_{K}: Auskuppelzeitpunkt
- T_{S}: Startzeitpunkt
- T_{E}: Endzeitpunkt
- n: Drehzahl

## Patentansprüche

1. Verfahren zur Ermittlung der Verlustleistung im Antriebsstrang eines Kraftfahrzeugs (1), das folgende Schritte aufweist:
- Bereitstellen eines Kraftfahrzeugs (1) mit die Antriebsräder ersetzenden, durch einen Antriebsstrang angetriebenen Massescheiben (3) mit bekanntem Trägheitsmoment Θ, wobei der Antriebsstrang zur Kraftübertragung von einem Motor auf die Antriebsräder ausgebildet ist;
- Positionieren des Kraftfahrzeugs (1) so, dass die Massescheiben (3) keinen Bodenkontakt haben;
- Antreiben der Massescheiben (3) durch den Motor;
- **gekennzeichnet durch** die schritte : Abkoppeln des Antriebsstranges von dem Motor zu ei schritte nem Auskuppelzeitpunkt T_{K};
- Messen der zeitlichen Entwicklung der Drehzahl n der Massescheiben (3) ab einem Startzeitpunkt T_{S} mit T_{S} ≥ T_{K} bis zu einem Endzeitpunkt T_{E}, wobei die Messung des zeitlichen Verlaufs der Drehzahl n zunächst mit ersten Massescheiben (3) mit einem Trägheitsmoment Θ_{1,} und anschließend mit zweiten Massescheiben mit einem Trägheitsmoment Θ₂ erfolgt, wobei Θ₁ ≠ Θ₂ gilt.

2. Verfahren nach Anspruch 1,
wobei für den Endzeitpunkt T_{E} n(T_{E})=0 gilt.

3. Verfahren nach Anspruch 1 oder 2,
wobei das Fahrzeug auf einer Hebebühne (2) positioniert wird.

4. Verfahren nach einem der Ansprüche 1 bis 3,
wobei die Messung der Drehzahl n mit einem ABS-Sensor erfolgt.

5. Verfahren nach einem der Ansprüche 1 bis 3,
wobei die Messung der Drehzahl n mit einem außerhalb des Kraftfahrzeugs (1) angeordneten Sensor (6) erfolgt.

6. Verfahren nach einem der Ansprüche 1 bis 5,
wobei die Messung der Drehzahl n lediglich an einer der Massescheiben (3) erfolgt.

7. Verfahren nach einem der Ansprüche 1 bis 6,
wobei die Messung der Drehzahl n an mindestens zwei Massescheiben (3) erfolgt.

8. Verfahren nach Anspruch 7,
wobei die für verschiedene Massescheiben (3) ermittelten Drehzahlen n miteinander verglichen werden.

9. Verfahren nach einem der Ansprüche 1 bis 8,
wobei vor dem Antreiben der Massescheiben durch den Motor die Beugewinkel der Antriebswelle auf einen für eine Fahrsituation des Kraftfahrzeugs typischen Wert eingestellt werden.

## Claims

1. A method for determining the power loss in the drive train of a motor vehicle (1), having the following steps:
- provision of a motor vehicle (1) with mass disks (3) with known moment of inertia θ which replace the drive wheels and are driven by a drive train, with the drive train being formed for power transmission from an engine to the drive wheels;
- positioning the motor vehicle (1) in such a way that the mass disks (3) do not have any ground contact;
- driving of the mass disks (3) by the engine, **characterized by** the following steps:
- uncoupling of the drive train from the motor at a disengaging time T_{K};
- measurement of the time development of the speed n of the mass disks (3) from a starting time T_{S}, with T_{S} ≥ T_{K}, up to an end time T_{E}, with the measurement of the progression over time of the speed n occurring at first with the first mass disks (3) with the moment of inertia θ₁, and thereafter with second mass disks with a moment of inertia θ₂, with θ₁ ≠ θ₂ applying.

2. A method according to claim 1, wherein T_{E} n(T_{E}) = 0 applies.

3. A method according to claim 1 or 2, wherein the vehicle is positioned on a lifting platform (2).

4. A method according to one of the claims 1 to 3, wherein the measurement of the speed n occurs with an ABS sensor.

5. A method according to one of the claims 1 to 3, wherein the measurement of the speed n occurs with a sensor (6) arranged outside of the motor vehicle (1).

6. A method according to one of the claims 1 to 5, wherein the measurement of the speed n occurs merely on one of the mass disks (3).

7. A method according to one of the claims 1 to 6, wherein the measurement of the speed n occurs on at least two mass disks (3).

8. A method according to claim 7, wherein the speeds n determined for the various mass disks (3) are compared with each other.

9. A method according to one of the claims 1 to 8, wherein prior to the driving of the mass disks by the engine the deflection angles of the drive shaft are set to a value typical for a driving situation of the motor vehicle.

## Revendications

1. Procédé pour la détermination de la puissance dissipée dans la chaîne de transmission d'un véhicule à moteur (1), comprenant les étapes suivantes :
- préparation d'un véhicule à moteur (1) avec des disques de masse (3) remplaçant les roues et entraînés par une chaîne de transmission, ayant un moment d'inertie Θ connu, la chaîne de transmission étant conçue pour transmettre l'énergie d'un moteur aux roues motrices ;
- positionnement du véhicule à moteur (1) de telle façon que les disques de masse (3) ne soient pas en contact avec le sol,
- entraînement des disques de masse (3) par le moteur ; **caractérisé en ce qu'**il comprend les étapes de :
- découplage de la chaîne de transmission du moteur à un instant de découplage T_{K} ;
- mesure de l'évolution dans le temps de la vitesse de rotation n des disques de masse (3) à partir d'un instant de début T_{S} où T_{S} ≥ T_{K} et jusqu'à un instant de fin T_{E}, la mesure de l'évolution dans le temps de la vitesse de rotation n étant d'abord effectuée avec des premiers disques de masse (3) ayant un moment d'inertie Θ₁, puis avec des deuxièmes disques de masse ayant un moment d'inertie Θ₂, où Θ₁ ≠ Θ₂.

2. Procédé selon la revendication 1, dans lequel on a pour l'instant de fin T_{E} n (T_{E}) = 0.

3. Procédé selon la revendication 1 ou 2, dans lequel le véhicule est positionné sur un pont de levage (2).

4. Procédé selon l'une des revendications 1 à 3, dans lequel la mesure de la vitesse de rotation n est effectuée avec un capteur d'ABS.

5. Procédé selon l'une des revendications 1 à 3, dans lequel la mesure de la vitesse de rotation n est effectuée avec un capteur (6) disposé à l'extérieur du véhicule à moteur (1).

6. Procédé selon l'une des revendications 1 à 5, dans lequel la mesure de la vitesse de rotation n est effectuée sur un seul des disques de masse (3).

7. Procédé selon l'une des revendications 1 à 6, dans lequel la mesure de la vitesse de rotation n est effectuée sur au moins deux disques de masse (3).

8. Procédé selon la revendication 7, dans lequel les vitesses de rotation n déterminées pour différents disques de masse (3) sont comparées entre elles.

9. Procédé selon l'une des revendications 1 à 8, dans lequel, avant l'entraînement des disques de masse par le moteur, l'angle de flexion de l'essieu moteur est réglé à une valeur typique d'une situation de marche du véhicule à moteur.
